Europäisches Patentamt

European Patent Office

Office européen des brevets

(11) Publication number : **0 664 080 A1**

## (12) EUROPEAN PATENT APPLICATION

(21) Application number : 95100897.8

(51) Int. Cl.⁶ : **A01N 1/00**, A01N 1/02

(22) Date of filing : 24.01.95

(30) Priority : 25.01.94 JP 23296/94
16.05.94 JP 125741/94
01.12.94 JP 323651/94
15.12.94 JP 334222/94

(43) Date of publication of application :
26.07.95 Bulletin 95/30

(84) Designated Contracting States :
DE FR GB

(71) Applicant : **KABUSHIKI KAISHA SEITAI
KAGAKU KENKYUSHO**
**340-2, Nauchi,**
**Shiromachi**
**Inba-gun, Chiba-ken (JP)**

(72) Inventor : **Shigematsu, Akiyo**
**1-22-11, Nanatsugidai,**
**Shiroimachi**
**Inba-gun, Chiba-ken (JP)**
Inventor : **Suzuki, Satoshi**
**1-22-11, Nanatsugidai,**
**Shiroimachi**
**Inba-gun, Chiba-ken (JP)**
Inventor : **Kaburagi, Takayuki**
**145, Takatsukashinden**
**Matsudo-shi, Chiba-ken (JP)**
Inventor : **Sueyoshi, Toru, 1-23-102,**
**Jutakukodan**
**Tokiwadairadanchi,**
**2-25, Tokiwadaira**
**Matsudo-shi, Chiba-ken (JP)**

(74) Representative : **von Kreisler, Alek,**
**Dipl.-Chem. et al**
**Patentanwälte**
**von Kreisler-Selting-Werner**
**Bahnhofsvorplatz 1 (Deichmannhaus)**
**D-50667 Köln (DE)**

(54) **Method for living-tissue preservation and perfusate.**

(57)   The invention provides a method for preservation of living tissues of an animal organ capable of maintaining their characteristics and functions on the cellular level. The invention also provides a perfusate and a preservation liquid for living-tissue preservation exerting less damage on the tissue, improving possibility of success in organ transplantation and accuracy of clinical or non-clinical study on biological activity of the tissue.

The method for living-tissue preservation comprises injection of the first solution causing no hemolysis into blood vessels as the perfusate to replace blood in the organ thereby, injection of the second solution free from phase separation and production of ice crystals in the tissue as the preservation liquid to substitute it for the first solution and preservation of the tissue at cryogenic temperature. Uniform cooling, rapid and uniform warming of the tissue sample are accomplished by piercing the tissue sample with a metal needle assembly comprising a plurality of metal needles and a metal base.

EP 0 664 080 A1

## Field of the Invention

This invention relates to a method for living-tissue preservation, in particular to a method for low-temperature living-tissue preservation, including cryo-preservation, which can maintain characteristics and function of cells constituting the tissue, a method for preservation and restoration of living-tissues, and a liquid composition, particularly, a liquid composition suitable for preservation of living-tissue such as an internal organ for organ transplantation, organs for clinical and non-clinical study, and a combination thereof.

## Background of the invention

For preservation of microorganisms such as bacteria, cells such as ovum, sperm, cultured cells etc. maintaining 50 % or more activity, a method is known wherein the cells are gradually cooled at a rate of about 1 °C per minute and preserved at about - 200 °C and rapidly melted (thawed) at the end of cryo-preservation. In this case, cells are placed in 10 % glycerol or 5 to 10 % dimethyl sulfoxide aqueous solution to prevent destruction of cells upon freezing.

Individual cells such as microorganisms, ovum, sperm, cultured cells, etc. can be preserved for relatively long period according to the above method. However, application of this method to animal tissues, for example, tissues of organ such as liver, kidney, etc., is accompanied with remarkable structural and functional damage of the cells.

Perfusates such as so-called UW liquid, Collins liquid, modified Collins liquid and Euro-Collins liquid have been used so far for perfusion of the organs such as heart, liver, kidney, pancreas, etc. to be resected for organ transplantation. For example, UW liquid has the following composition:

| (for 1 liter of an aqueous solution) | |
| --- | --- |
| Potassium lactobionate | 100 mmol |
| Potassium dihydrogen phosphate | 25 mmol |
| Magnesium sulfate | 5 mmol |
| Raffinose | 30 mmol |
| Adenosine | 5 mmol |
| Glutathione | 3 mmol |
| Allopurinol | 1 mmol |
| Insulin | 100 IU |
| Dexamethasone | 8 mg |
| Hydroxyethyl starch | 50 g |

To preserve tissues of organs for clinical and non-clinical study, such liquid has been used for perfusion. Such liquid and physiological saline have been used also for reperfusion to restore biological activity of the tissue after preservation at low temperature.

However, characteristics and function of the tissue of the organs after perfusion with such perfusate and preservation in a preservation liquid having the same composition are damaged on a cellular level even at the beginning of the preservation by cooling below 10 °C. This damage is one of the main causes lowering possibility of success of transplantation using preserved organ.

Under these circumstances, it is difficult to perform an experimental study on tissue maintaining the normal function of the original tissue in clinical and non-clinical researches on biological activities such as metabolism in tissue.

When the tissue suffers from structural and functional damages, such damage may affect considerably the experimental results, limiting the accuracy of the study. Actually, such effect is obviously observed in some cases. Reperfusion conducted in order to restore the biological activity after preservation also has the similar problems.

Accordingly, there have been demands for perfusion and preservation liquid with less structural and functional damage of tissue on a cellular level to improve possibility of success in organ transplantation and to improve accuracy of clinical and non-clinical studies on biological activity such as metabolism in tissue. Moreover, for reperfusion after preservation, reperfusate exerting less structural and functional damage on tissue on a cellular level before restoration of biological activity has been expected.

## Summary of the invention

Accordingly, the first object of the present invention is to provide a method to preserve tissues which constitute organs maintaining their characteristics and functions on a cellular level.

The second object of the present invention is to provide a perfusate, a preservation liquid and a combination thereof, exerting less damage on tissue on a cellular level to improve possibility of success in organ transplantation and to improve accuracy of clinical and non-clinical study on biological activity such as metabolism in tissue.

Another object of the present invention is to provide a perfusate for reperfusion after preservation, which does not damage structure and function of tissue on a cellular level before restoration of biological activity.

## Means to solve the Problem

To accomplish this object, the method for living-tissue preservation according to the present invention comprises injecting the first saccharide solution (perfusate) producing substantially no hemolysis in blood into blood vessels leading to a desired organ of an animal so as to substitute the first saccharide solution for blood in said organ; injecting the second saccharide solution (preservation liquid) containing saccharide and an organic solvent, an aqueous solution of said saccharide being free from phase separation and producing substantially no crystals at cryogenic temperature such as liquid nitrogen temperature and a mixture of said organic solvent and water being free from phase separation and producing substantially no crystals of ice at cryogenic temperature such as liquid nitrogen temperature, into one or more blood vessels so as to substitute the second saccharide solution for the first saccharide solution in the blood vessels; resecting at least a part of the organ; piercing the organ with a needle assembly consisting of a number of metal needles fixed parallel to each other; gradually cooling at a limited rate to a predetermined temperature, e.g. -80 °C, further cooling to lower temperature and preserving the sample pierced with the needle assembly at a cryogenic temperature such as liquid nitrogen temperature; and rapidly raising temperature of at least a part of the needle assembly to a temperature above 20 °C to raise the temperature of the sample above the freezing point of the second saccharide solution; and removing the sample from the needle assembly. The present invention can be applied to organs such as internal organs as well as binding tissues such as muscle of animals.

The perfusate (first saccharide solution) of the present invention is used to remove blood in a blood vessel (including sinusoid) and to substitute said perfusate for the blood as pretreatment for preservation of tissue such as organs of an animal. This perfusate is characterized by freedom from hemolysis which produces adhesion of hemocyte components onto the surface of cells to harm the function of the tissue.

The preservation liquid (the second saccharide solution) of the present invention is used to be substituted for the perfusate in blood vessels (including sinusoids) and intracellular spaces of the tissue such as organs of an animal after removal of blood filled with the perfusate to obtain a state suitable for preservation. It is preferred to use the perfusate according to the present invension as the perfusate above. The preservation liquid is also utilized for immersion of the tissue to be preserved or poured onto the tissue. The second saccharide solution may be injected for perfusion either into the same blood vessels used for the first saccharide solution or into the different one from the latter.

The electrolytes in the preferred perfusate, preservation liquid and reperfusate of the present invention can be derived from the composition of Krebs-Henseleit bicarbonate buffer. The pH of 7.4 can be attained by preparation according to the composition of Krebs-Henseleit bicarbonate buffer.

Instead of resecting a sample of tissue after substitution of the first and the second saccharide solution for blood (hereinafter referred to as perfusion), the whole or a desired part of an organ may be resected from an animal before or during perfusion or between the first and the second perfusion. The desired part is, for example, one or two of liver lobes. Surgery is required for either perfusion or resection. When perfusion is carried out after resection, a part of the sample may be further cut off as a sample after perfusion. It is preferable to block peripheral nerve of the animal particularly around the objective organ before operation for preservation of the function of the tissue.

Blockage of peripheral nerve around the objective organ can be attained by intravascular or intraperitoneal injection of a substance having monoamine oxidase (hereinafter abbreviated to MAO) inhibitory activity. The MAO inhibitor which can be applied to the present invention includes, N-aminoalkylphenothiazine compounds, N-aminoalkyldibenzocycloheptadiene compounds, isonicotinic acid hydrazide compounds and propargyl amine derivatives, for example, chlorpromazine, promethazine, imipramine, iproniazid, pardiline, etc. The MAO inhibitor may be injected intravascularlly or intraperitoneally before or during perfusion. The MAO inhibitor may be added to the perfusate (first saccharide solution). The MAO inhibitor may also be added to the preservation liquid (second saccharide solution).

Perfusion is generally carried out by inserting a cannula (hollow) into one or more blood vessels leading to an organ. The flow rate may be selected depending on the type of organ, the type and thickness of the blood vessel. Substitution of the first and second saccharide solutions may be carried out sufficiently so that there remains substantially no blood and the first saccharide solution, respectively. During perfusion and preservation, required portions of the blood vessels may be blocked to hold the preservation liquid in the tissue.

Saccharides contained in the second saccharide solution should be those free from phase separation and producing substantially no crystals at liquid nitrogen temperature, for example mannitol and inulin. "Producing substantially no crystals" means that the saccharide does not produce so much crystals to damage the structure and biological activity of the tissue after preservation. Such saccharide need not penetrate into cells. Those hardly penetrating into cells are rather preferred.

The first saccharide solution preferably contains saccharide effective for maintenance of biological activity of the tissue, such as glucose. Preferably, the concentration of glucose is equal to or similar to that in the tissue. The first saccharide solution should have the composition free from hemolysis which is a cause of the residual hemocytes in the tissue. "Free from substantial hemolysis" means that structure and biological activity of tissue are not damaged by hemolysis.

Preferably, the first and second saccharide solution and reperfusate are substantially isotonic with the tissue. However, those having osmotic pressure of from 1/2 to twice as much as that of blood or lymph may be used.

The first and second saccharide solution may contain saccharides as well as salts, acids, bases, buffer, surfactants, thickeners, etc. The same may be said of reperfusate used subsequent to low-temperature storage. It is desired that the first saccharide solution has composition free from hemolysis. Preferably, it contains glucose at the concentration equal to or similar to that in the tissue. The temperature of the first and the second saccharide solution is preferably maintained at a temperature as low as possible (higher than freezing point of the liquid, i.e. generally - 10 °C to + 5 °C) to prevent change of tissue.

For an organic solvent used for the second saccharide solution, a mixture of said organic solvent and water should be free from phase separation and produces substantially no crystals of ice at liquid nitrogen temperature. "Producing substantially no crystals" means that crystals so much as to damage structure and biological activity of the tissue after preservation are not produced. Organic solvents possessing such characteristics include, for example, glycerol and dimethyl sulfoxide. The concentration of an organic solvent in the second saccharide solution is suitably 5 - 10 %. A slightly lower (e.g., 3 %) or higher (e.g., 15 %) concentration may be employed.

The perfusate to attain the above object in the present invention is an aqueous liquid composition consisting of a buffer of pH 7.4 containing sodium, potassium, hydrogen, chlorine and phosphate ions, and preferably further containing calcium, magnesium, sulfate and bicarbonate ions; 1 to 5 % by weight of glucose; 1.5 to 7.5 % by weight of bovine serum albumin, the concentration of sodium chloride being $0.15 \pm 0.05$ mol.

In the present invention, the preservation liquid to attain the above object is an aqueous liquid composition consisting of a buffer of pH 7.4 containing sodium, potassium, hydrogen, chlorine and phosphate ions, and preferably further containing calcium, magnesium, sulfate and bicarbonate ions; 3 to 8 % by weight of mannitol; 1.5 to 7.5 % by weight of bovine serum albumin and 3 to 15 % by weight of dimethyl sulfoxide or glycerol, the concentration of sodium chloride being $0.15 \pm 0.05$ mol.

The combination of a preservation liquid and a perfusate to attain the above object of the present invention is a combination of perfusate composition consisting of a buffer of pH 7.4 containing sodium, potassium, hydrogen, chlorine and phosphate ions, and preferably further containing calcium, magnesium, sulfate and bicarbonate ions; 1 to 5 % by weight of glucose; 1.5 to 7.5 % by weight of bovine serum albumin, the concentration of sodium chloride being $0.15 \pm 0.05$ mol and preservation liquid composition consisting of a buffer of pH 7.4 containing sodium, potassium, hydrogen, chlorine and phosphate ions, and preferably further containing, calcium, magnesium, sulfate and bicarbonate ions; 3 to 8 % by weight of mannitol; 1.5 to 7.5 % by weight of bovine serum albumin, 3 to 15 % by weight of dimethyl sulfoxide or glycerol, the concentration of sodium chloride being $0.15 \pm 0.05$ mol.

The reperfusate to attain the above object of the present invention is an aqueous liquid composition consisting of a buffer of pH 7.4 containing sodium, potassium, hydrogen, chlorine and phosphate ions, and preferably further containing, calcium, magnesium, sulfate and bicarbonate ions; 0.5 to 3 % by weight of glucose; 0.5 to 3 % by weight of mannitol, 1.5 to 7.5 % by weight of bovine serum albumin, the concentration of sodium chloride being $0.15 \pm 0.05$ mol.

Metal needles and a metal base used for a needle assembly preferably consist of metal at least surface of which never affects the tissue and the saccharide solutions and never produce rust or corrosion with the tissue and the saccharide solutions. For example, needles consisting of stainless steel, gold, platinum, gold-plated or chromium-plated iron or brass, etc. are used.

The thickness of the metal needle should be such that the needles have mechanical strength sufficient to pierce through the tissue sample. More rapid heat conduction may be obtained by thicker metal needles arranged with less spaces. Such arrangement allows, the temperature of the sample to be raised more rapidly at the end of preservation at low temperature, though mechanical damage of the whole sample is increased. Suitably, the thickness of the metal needle is 0.2 to 1.6 mm, and space (center distance) is 0.5 to 4 mm.

Cooling of the tissue sample pierced with the metal needles is desirably carried out gradually at least until the temperature reaches to - 80 °C. For example, the temperature is lowered at a rate not greater than 1.3 °C per minute on the average until the temperature reaches to - 80 °C. For example, a sample is placed in a cold reserving box of a suitable size in a freezer kept at - 80 °C to achieve such cooling condition. A program-controlled freezer may be used.

At the end of preservation, at least a part of the needle assembly is rapidly warmed (for example within 2 minutes) to a temperature not below 20 °C, to rapidly raise the temperature of the sample above the melting point of the second isotonic saccharide solution (generally, to a temperature of - 10 °C to + 5 °C, e.g., - 5 °C). For example, a warm water (20 - 30 °C) (liquid other than water may be used) is let flow around the metal base. Alternatively, perfusate (saccharide solution) at a suitable temperature is allowed to flow around the sample pierced with a needle assembly. In this way, the temperature of the tissue sample is raised above the freezing point of the second saccharide solution preferably within 4 minutes to allow the sample to thaw.

After the portion of the sample contacted with the metal needle can be allowed to thaw, the whole sample is removed from the needle assembly by appropriate means, for example, by pulling up cloth or synthetic paper previously placed just above the base of the metal needles. The removed sample may be perfused with physiological saline, isotonic saccharide solution, tissue culture medium or the like ($\leqq$ 10 °C) before the subsequent use.

After thawing, the tissue sample is reperfused with a perfusate at a suitable temperature (e.g., 4 °C), then warmed to a temperature not below 25 °C to restore the required biological activity before the subsequent use. As reperfusate, physiological saline, saccharide solution (including the initial perfusate of the present invention), tissue culture, etc. may be used. Preferably, the reperfusate of the present invention is used.

Before restoration of biological activity, the temperature is preferably raised gradually from that of the tissue at the end of thawing to about 25 °C. Subsequently, the temperature is further raised to about 37 °C while perfusing with a perfusate of a suitable composition. The rate of raising the temperature from that for the tissue sample to accomplish thawing to 25 °C or above is at most 4 °C per minute, preferably less than 2.5 °C per minute, on the average, more preferably at most 2.2 °C per minute on the average. Time required to raise the temperature from 25 °C to about 37 °C is not particularly limited. The reperfusate of the present invention may contain a substance which inhibits consumption of energy of the tissue, for example, lactobionic acid. The concentration of lactobionic acid is preferably 0.3 to 3 %. The reperfusate of the present invention may contain a substance which inhibits production of peroxide, for example, ascorbic acid, hydrocortisone, in addition to mannitol. It may contain 1 mg/l to 2 g/l of ascorbic acid. Clinical dose of hydrocortisone may be used. The reperfusate of the present invention may contain $5 \times 10^{-5}$ to $3 \times 10^{-4}$ mol of dibutyryl cyclic AMP, which is effective for prevention of damage of cell membrane at low oxygen content.

The present invention is useful for low-temperature preservation of liver, kidney, pancreas, spleen, testes, ovarium, adrenal glands, brain, thyroid gland, etc. Particularly, it is effective for preservation of liver at low temperature.

The first saccharide solution injected into blood vessels leading to an organ of an animal serves to remove blood in the organ and substitute the solution for the blood. The perfusate of the present invention is free from hemolysis during substitution, preventing deterioration of cellular function due to adhesion of hemocytes on the surface of the tissue cells. Further, the second saccharide solution is injected to be substituted for the first saccharide solution so that the first isotonic saccharide solution is removed and the blood vessels are filled with the second saccharide solution. At the same time, sinusoid as well as intracellular spaces are also filled with the second saccharide solution.

The resected tissue sample (it may be cut off before perfusion) is pierced with a needle assembly consisting of a number of metal needles fixed parallel to each other on a metal base. On gradually cooling, the temperature of the whole sample is maintained relatively homogeneous by heat-conduction by means of the metal needles which pierce the sample. The temperature is further lowered to low temperature such as liquid nitrogen temperature and maintained at the temperature at which the sample pierced with the needle assembly is preserved.

Using the second saccharide solution introduced into the tissue through the blood vessel, crystals of the saccharide itself and ice are not produced at least outside of the cells (including inside of the blood vessel, sinusoid, intracellular spaces) because an aqueous solution of the second saccharide solution contains saccharide free from phase separation and producing substantially no ice crystals even at liquid nitrogen temperature. The saccharide solution contains an organic solvent which is well compatible with water and a mixture of which with water is free from phase separation and producing substantially no crystals even at the temperature of liquid nitrogen. Such organic solvent as used in the invention penetrates into the cells. Because such organic solvent exists both inside and outside of the cells, ice and crystals of solvent (eutectic substance) are not formed in the tissue at liquid nitrogen temperature. Accordingly, destruction of cells due to formation of ice and crystals of solvent may be prevented. So with the reservation at the temperature between liquid nitrogen temperature and the freezing point. The preservation at the temperature above the freezing point (generally, below 10 °C) is free from problems of ice crystal production, and production of peroxide which damages cellular function is prevented by existence of mannitol.

At the end of preservation, at least a part of the needle assembly is rapidly warmed to a temperature above 20 °C. Then the temperature of the sample is raised above the melting point of the second saccharide solution. When the portion of the sample contacted with the metal needle is allowed to thaw, the sample can be removed from the needle assembly. When the temperature of the tissue is further raised above 25 °C, the biological activity of the tissue can be restored. By heat conduction via the metal needle assembly, the temperature of the whole sample is raised more rapidly and relatively homogeneously compared with the case without using such metal needle assembly. Due to the rapid and homogeneous increase of the temperature of the sample, the characteristic and function of the cells may be restored without damage. They can be restored by subsequent control of the environment (e.g., temperature). While the temperature of the tissue after preservation is raised to 25 °C or above after thawing, perfusion is carried out using the reperfusate of the present invention. In this way, an organic solvent is removed from inside and outside of the cells before restoration of biological activity, while maintaining energy supply to the cells. Further, production of peroxide which damages cellular function is inhibited. Accordingly, reperfusion with the reperfusate of the present invention is superior to that using physiological saline or UW liquid in restoration of biological activity of the tissue after the temperature is raised above 25 °C.

## Example

The present invention will be described in more detail in the following examples.

## Example 1

(1) Preparation of a needle assembly

Stainless steel needles for injection (outer diameter, 0.3 mm; length, 15 mm, without connecting member to syringe) were placed straight with the tip upward on a base made of low-melting point alloy (10 x 12mm). For removal of the sample, glass rods of 0.6 mm in diameter were inserted crosswise between needles parallel to the base.

(2) Liver perfusion

A cannula was thrust into the hepatic portal vein of a healthy rat by celiotomy. According to the conventional manner of liver perfusion, the first perfusate of the following composition (4 °C) was injected into the hepatic portal vein through a polyethylene tube connected to the cannula at a flow rate of 4 ml/min and perfused for 5 minutes.

| D-Mannitol | 1 g |
|---|---|
| Krebs-Ringer buffer | 20 ml |

Subsequently, the second perfusate of the following composition (4 °C) was injected into the hepatic portal vein through a polyethylene tube connected to the cannula at a flow rate of 4 ml/min and perfused for 5 minutes.

Dimethyl sulfoxide        2 g

| | |
|---|---|
| D-Mannitol | 1 g |
| Krebs-Ringer buffer | 20 ml |

**(3) Preservation at low temperature**

Immediately after perfusion, liver was pierced with a metal needle assembly. The liver was placed in a cold reserving box made of polystyrene foam, which was in turn placed in a freezer at - 80 °C (gradually cooled at a rate less than 1 °C/min). After more than 3 hours of freezing at - 80 °C, an appropriate amount of liquid nitrogen was poured into the cold reserving box, and further frozen. While supplying liquid nitrogen, the liver sample was preserved for 3 weeks.

**(4) Thawing of the tissue**

A grid was fixed at the depth of 2 mm in a constant-temperature water bath at 25 °C. The liver sample pierced with a needle assembly was removed from the cold reserving box and mounted on the grid. The metal base was heated with the constant-temperature water (25 °C) flowing around the base. After 2 minutes, the sample was removed by pulling up the glass grid inserted between the sample and the base. The first perfusate (4 °C) was injected into the liver through the portal vein at a flow rate of 4 ml/min. and perfused for 5 hours, to replace the second perfusate in the liver by the first perfusate.

**(5) Verification of preserved tissue**

Liver sample was fixed with formalin, cut into strips of 5 micron thickness and dyed. The microscopic observation suggested that the cells of the liver were well preserved. Especially, glycogen granules were clearly observed.

**Example 2**

**(1) Preparation of a needle assembly**

Gold-plated brass needles (outer diameter, 0.8 mm; length, 20 mm) were placed straight (10 x 12mm, with the tip upward) on a lead alloy base. For removal of the sample, synthetic paper was pierced with the needle and pushed down just above the base.

**(2) Tissue sampling and perfusion**

0.1 ml/ per 100 g of body weight of 1 % aqueous solution of chlorpromazine was injected intraperitoneally into an abdominal cavity of a healthy rat to block abdominal peripheral nerve. A cannula connected to a polyethylene tube was thrust into the hepatic portal vein of the rat which had been anesthetized by injection of 0.04 mg/100 g of somnopentyl by celiotomy. According to the conventional manner of liver perfusion, the first perfusate of the following composition (- 5 °C) was injected into the hepatic portal vein through a polyethylene tube connected to the cannula at a flow rate of 0.9 ml/min and perfused for 4 minutes. Liver was resected from the rat with perfusion.

| | |
|---|---|
| D-Glucose | 2 g |

| BSA | 4.5 g |
| Enzyme inhibitor Pefabloc (Merck) | 1 mM eq |
| p-APMSF | 0.1 mM eq |
| (p-amidinophenylmethanesulfonylfluoride hydrochloride) | |
| Krebs-Henseleit buffer | 100 ml |
| Chlorpromazine | 1 g |
| Heparin | 0.5 ml |

The resected liver was immediately immersed in the solution of the following composition (the second perfusate) at - 5 °C, and the second perfusate was injected into the hepatic portal vein at a rate of 0.9 ml/min and perfused for 4 minutes.

| Dimethyl sulfoxide | 10 g |
| D-Mannitol | 5 g |
| D-Glucose | 2 g |
| BSA | 4.5 g |
| Enzyme inhibitor Pefabloc (Merck) | 1 mM eq |
| p-APMSF | 0.1 mM eq |
| Krebs-Henseleit buffer | 100 ml (pH 7.4) |

(2) Preservation at low temperature

Immediately after perfusion, liver was pierced with a metal needle assembly (gold-plated brass needle, diameter, 0.8 mm; center distance, 3 mm; height of needle, 20 mm; thickness of the metal base, 5 mm). Previously, synthetic paper was inserted at the base of the metal needles. The liver was placed in a sealed cold-resistant polyethylene bag, and cooled to - 80 °C in a program-controlled freezer (- 1 °C/min.). After three hours or more, an appropriate amount of liquid nitrogen was poured over the liver in a cold reserving box for further cooling. While supplying liquid nitrogen, the liver sample was preserved for 3 weeks.

(4) Thawing of the tissue

The vessel containing the sample was removed from liquid nitrogen and placed in a freezer at - 80 °C for a while. The temperature of the whole sample was raised to - 4 °C within a short time (less than 2 minutes for 50 g of tissue) by circulating the thawing liquid of the same compositions as those of the first perfusate around the sample.

The sample was removed from the metal needle assembly in the thawing liquid. The first perfusate kept at - 4 °C was injected at a rate of 1 ml/min in the portal vein through the cannula. After perfusion for 4 minutes, the second perfusate in a liver was substituted for the first perfusate.

A part of the tissue was fixed, dyed and observed using an optical microscope. By comparison with tissue immediately after resection (with perfusion only with the first perfusate), change of the tissue was hardly observed.

**Example 3**

The sample was treated in the same manner as in Example 2, except that preservation at low temperature was conducted as follows:

The liver after perfusion pierced with a metal needle assembly was placed in a cold reserving box in a freezer at - 80 °C (gradually cooled at a rate less than 1 °C/min.). After 3 hours or more, a suitable amount of liquid nitrogen was poured onto the cold reserving box and further cooled. While supplying liquid nitrogen, the liver sample was preserved for 3 weeks.

The same results as those in Example 2 were obtained.

**Example 4**

(1) Preparation for perfusion

0.1 ml of 1 % aqueous chlorpromazine per 100 g of body weight was injected peritoneally into an abdominal cavity of a healthy rat to block abdominal peripheral nerve. After 50 μl/100 g body weight of heparin solution (1000 IU/ml) was injected, the rat was anesthetized with halothane according to the conventional manner. Cannula connected with a polyethylene tube was thrust into the hepatic portal vein (portal cannulation) by celiotomy. In the similar way, descending aorta was cannulated (descending aorta cannulation), and descending aorta and descending vena cava were ligated together. The aorta was fixed with a clamp, aorta and the vena cava were cut off by thoracotomy.

(2) Perfusion

The ligated portion of the descending vena cava was cut off, and the first perfusate of the following composition at - 5 °C was injected into the descending aorta through the descending aorta cannulation at a rate of 1.5 ml/min., and into the hepatic portal vein through the portal cannulation at a rate of 1.0 ml/min., respectively, and perfused for 10 minutes.

| D-Glucose | 2 g |
| BSA | 3 g |
| Krebs-Henseleit bicarbonate buffer | 100 ml |
| Chlorpromazine | 0.01 g |

After confirming blood was completely removed from the liver, the liver was resected from a rat. At this moment, the portal vein and descending vena cava were cut off ensuring the cannulation at the liver side.

The liver was immediately immersed in a liquid of the following composition (second perfusate) at - 5 °C, and perfused for 10 minutes while injecting the second perfusate into the descending vena cava through descending vena cava cannulation at a rate of 1.5 ml/min and into the hepatic portal vein through portal cannulation at a rate of 1.0 ml/min, respectively.

```
Dimethyl sulfoxide                              10 g

D-Mannitol                                       5 g


BSA                                              3 g

Krebs-Henseleit bicarbonate buffer  100 ml (pH 7.4)
```

(2) preservation at low temperature

Immediately after perfusion, the liver was pierced with a metal needle assembly (gold-plated brass needle; diameter of the needle, 0.8 mm; center distance, 3 mm; height of the needle, 20 mm; thickness of the metal base, 5 mm). A sheet of synthetic paper had been inserted at the base of the metal needles. The liver sample was placed in a cold-resistant polyethylene bag, and cooled in a program-controlled freezer (- 1 °C/min) to - 80 °C. After more than 3 hours of freezing at - 80 °C, a suitable amount of liquid nitrogen was poured over the sample in a cold reserving box for further cooling. While supplying liquid nitrogen, the liver sample was preserved for 3 weeks.

(3) Thawing of the tissue

The box containing the sample was removed from liquid nitrogen, and allowed to stand for a while in a freezer at - 80 °C. Subsequently, the tissue sample was immersed in a thawing liquid (at about 30 °C) of the same composition as that of the first perfusate, then the liquid was circulated to raise the whole sample to 4 °C in a short time, i.e., 2 minutes or less for 50 g of the tissue.

The sample was removed from the metal needle assembly in the thawing liquid. Subsequently, the third perfusate of the following composition was injected into the descending vena cava through descending vena cava cannulation at a rate of 1.5 ml/min and into the hepatic portal vein through portal cannulation at a rate of 1.0 ml/min. The third perfusate was substituted for the second perfusate in the liver after perfusion for 10 minutes. The initial temperature of the third perfusate was 4 °C, and raised to 25 °C at the rate of about 2.1 °C per minute.

| Third perfusate: | |
| --- | --- |
| D-Mannitol | 1 g |
| D-Glucose | 2 g |
| Lactobionic acid | 5 mmol |
| BSA | 3 g |
| Ascorbic acid | 0.1 g |
| Krebs-Henseleit bicarbonate buffer | 100 ml (pH 7.4) |

A part of the tissue was fixed and dyed according to the conventional method. By optical microscopic observation, change of tissues was hardly observed compared with those immediately after resection (only perfusion with the first perfusate).

The liver after perfusion with the third perfusate in Example 4 was placed in a box (temperature, 37 °C; relative humidity, 100 %). 185 kBq [2-$^{14}$C] diazepam was injected through portal cannulation. Immediately, a perfusate for metabolic experiment of the following composition was supplied at a rate of 1 ml/min using a regulated-flow pump.

| Rat blood cells | 30g |
| --- | --- |
| D-glucose | 2g |
| BSA | 3g |
| Ascorbic acid | 0.1g |
| Krebs-Henseleit bicarbonate buffer | 100ml (pH 7.4) |

Simultaneously, the same solution was supplied at 1.5 ml/min through arterial cannulation. Perfusion was continued for 20 minutes, and the perfusate flooded from the liver was collected in test tubes through a funnel every 2 minutes.

The collected perfusate was centrifuged at 3,000 rpm for 10 minutes. The radioactive metabolite in the supernatant was separated by thin layer chromatography, and detected by radioluminography. As the results, the parent compound, diazepam, as well as metabolites thereof, 4'-hydroxydiazepam, nordazepam, temazepam and oxazepam were detected in the effluent. They are metabolites observed in the experiment using a liver which has not been cryo-preserved. The results show that the liver tissues preserved according to the present invention have activity to metabolize diazepam.

By quantitative determination of lactic acid dehydrogenase (LDH), the activity of LDH in each effluent was found to be about 100 IU/L, and showed normal value throughout perfusion for 20 minutes. The results suggest that the liver tissue was not injured by freezing and thawing.

Living-tissues such as organs and muscles preserved according to the present invention maintain the characteristics and functions of the cells. The method of the present invention is particularly useful for preservation of tissues of liver and kidney. The perfusate, preservation liquid and reperfusate are useful for preservation and treatment after preservation of organs, particularly, liver and kidney, for organ transplantation and clinical and non-clinical studies of living tissues.

## Claims

1. A method for living-tissue preservation which comprises injecting a perfusate into a blood vessel leading to an organ of an animal to substitute said perfusate for blood in said organ, cooling at least a part of said organ resected as a tissue sample from said animal to lower the temperature to liquid nitrogen temperature and keeping said tissue sample at this temperature for preservation of said tissue sample, wherein;

   the first saccharide solution causing substantially no hemolysis in blood is injected as the first perfusate into one or more blood vessels leading to said organ to be substituted for blood in said organ;

   then the second saccharide solution containing a saccharide and an organic solvent, an aqueous solution of said saccharide being free from phase separation and producing substantially no crystals at liquid nitrogen temperature and a mixture of said organic solvent and water being free from phase separation and producing substantially no crystals at liquid nitrogen temperature, is injected into one or more blood vessels leading to said organ as the second perfusate to be substituted for the first perfusate in said organ;

   and the tissue sample of said organ is cooled to liquid nitrogen temperature.

2. A method for living-tissue preservation according to claim 1, wherein said second saccharide solution contains mannitol as said saccharide.

3. A method for living-tissue preservation according to claim 1 or 2, wherein said organic solvent is dimethyl sulfoxide or glycerol.

4. A method for living-tissue preservation according to any one of claims 1 to 3, wherein the whole or a desired portion of said organ is resected from said animal after substitution of the first saccharide solution for blood in said organ.

5. A method for living-tissue preservation according to any one of claims 1 to 4, wherein said first saccharide solution contains glucose.

6. A method for living-tissue preservation according to any one of claims 1 to 5, wherein the first saccharide solution contains a substance having monoamine oxidase inhibitory activity.

7. A method for living-tissue preservation according to any one of claims 1 to 6, wherein said animal is a mammal.

8. A method for living-tissue preservation which comprises injecting a perfusate into a blood vessel leading to an organ of an animal, cooling at least a part of said organ resected as a tissue sample from said animal to lower the temperature to liquid nitrogen temperature and keeping said tissue sample at this temperature to preserve tissues of said organ, wherein

   peripheral nerve of a region including said organ is blocked;

   the first saccharide solution causing substantially no hemolysis in blood is injected as the first perfusate into one or more blood vessels leading to said organ so as to be substituted for blood in said organ;

   subsequently, the second saccharide solution for further perfusion containing a saccharide and an organic solvent, an aqueous solution of said saccharide being free from phase separation and producing substantially no crystals at liquid nitrogen temperature and a mixture of said organic solvent and water being free from phase separation and producing substantially no crystals at liquid nitrogen temperature, is injected as the second perfusate into one or more blood vessels leading to said organ so as to be substituted for the first saccharide solution in said organ;

   thereafter the temperature is lowered to liquid nitrogen temperature.

9. A method for living-tissue preservation according to claim 8, wherein peripheral nerve is blocked by intravascular or intraperitoneal introduction of a peripheral nerve blocking agent into said animal.

10. A method for living-tissue preservation according to claim 9, wherein said peripheral nerve blocking agent has monoamine oxidase inhibitory activity.

11. A method for living-tissue preservation which comprises cooling at least a part of organ resected as a tissue sample from an animal to lower the temperature to liquid nitrogen temperature and keeping said tissue sample at this temperature for preservation, wherein;

at least a part of said resected organ is pierced as a tissue sample with a needle assembly consisting of a plurality of metal needles fixed parallel to each other on a metal base;

said sample pierced with said needle assembly is gradually cooled to a predetermined temperature, further cooled to lower the temperature to liquid nitrogen temperature, and preserved at liquid nitrogen temperature.

12. A method for living-tissue preservation according to claim 11, wherein the cooling rate of said gradual cooling is at most 1.3 °C/min on the average and said predetermined temperature is - 80 °C.

13. A method for living-tissue preservation by lowering the temperature of at least a part of organ resected from an animal to liquid nitrogen temperature for preservation thereat, wherein;

at least a part of an organ is resected from an animal and pierced as a tissue sample with a needle assembly consisting of a plurality of needles fixed parallel to each other on a metal base;

said sample pierced with this needle assembly is gradually cooled to a predetermined temperature, further cooled to liquid nitrogen temperature and preserved at the liquid nitrogen temperature;

the temperature of the base of said needle assembly is raised to a temperature not below 20 °C within 4 minutes for thawing said tissue sample at the end of preservation.

14. A method for living-tissue preservation which comprises injecting a perfusate into a blood vessel leading to an organ of an animal to substitute said perfusate for blood in said organ, cooling at least a part of said organ resected as a tissue sample from said animal to lower the temperature to liquid nitrogen temperature and keeping said tissue sample at this temperature for preservation, wherein;

the first saccharide solution causing substantially no hemolysis in blood is injected as the first perfusate into one or more blood vessels leading to said organ so as to be substituted for blood in said organ;

the second saccharide solution containing a saccharide and an organic solvent, an aqueous solution of said saccharide being free from phase separation and producing substantially no crystals at liquid nitrogen temperature, and a mixture of said organic solvent and water being free from phase separation and producing substantially no crystals, is injected as the second perfusate into one or more blood vessels leading to said organ so as to be substituted for the first saccharide solution in said organ;

at least a part of organ resected as a tissue sample from said animal is pierced with a needle assembly consisting of a plurality of metal needles fixed parallel to each other on a metal base; and

the tissue sample pierced with said needle assembly is gradually cooled to a predetermined temperature, further cooled to liquid nitrogen temperature and kept at the liquid nitrogen temperature for preservation.

15. A method for living-tissue preservation according to claim 14, wherein said organic solvent is dimethyl sulfoxide or glycerol.

16. A method for living-tissue preservation according to claim 14 or 15, wherein said second saccharide solution contains mannitol as said saccharide.

17. A method for living-tissue preservation according to any one of claims 14 to 16, wherein said first saccharide solution contains glucose.

18. A method for living-tissue preservation according to any one of claims 14 to 17, wherein the rate of said gradual cooling is at most 1.3 °C/min on the average and said predetermined temperature is - 80 °C.

19. A method for living-tissue preservation according to claim 14, wherein the whole or a desired portion of said organ is resected from said animal after substitution of the first saccharide solution for blood in said organ.

20. A method for living-tissue preservation, which comprises;

injecting the first perfusate causing substantially no hemolysis in blood into one or more blood vessels leading to an organ of an animal to substitute said first perfusate for blood in said organ;

resecting the whole or a desired portion of said organ during or after said substitution;

subsequently injecting the second saccharide solution for further perfusion containing a saccharide and an organic solvent, an aqueous solution of said saccharide being free from phase separation and producing substantially no crystals at liquid nitrogen temperature and a mixture of said organic solvent and water being free from phase separation and producing substantially no crystals at liquid nitrogen temperature, into one or more blood vessels to substitute said second saccharide solution for said first perfusate in said organ;

piercing at least a part of said organ perfused by the second saccharide solution as a tissue sample with a needle assembly comprising a plurality of metal needles fixed parallel to each other, cooling said sample pierced with said needle assembly gradually to a predetermined temperature, further cooling to liquid nitrogen temperature, and preserving the sample at the liquid nitrogen temperature;

warming at least a part of said needle assembly to a temperature not below 20 °C within a period not exceeding 4 minutes to raise the temperature of said tissue sample above the freezing point of said second saccharide solution; and

removing said tissue sample from said needle assembly.

21. A method for living-tissue preservation according to claim 20, wherein the rate of said gradual cooling is at most 1.3 °C/min on the average and said predetermined temperature is - 80 °C.

22. A method for living-tissue preservation according to claim 20 or 21, wherein said first saccharide solution contains glucose.

23. A method for living-tissue preservation according to claim 20, wherein the temperature of a base of said needle assembly is raised to a temperature not below 20 °C within 3 minutes.

24. A method for living-tissue preservation, which comprises;

injecting the first saccharide solution causing substantially no hemolysis in blood for perfusion into one or more blood vessels leading to an organ of an animal so as to substitute said first saccharide solution for blood in said organ;

subsequently injecting the second saccharide solution for further perfusion containing a saccharide and an organic solvent, an aqueous solution of said saccharide being free from phase separation and producing substantially no crystals at liquid nitrogen temperature and a mixture of said organic solvent and water being free from phase separation and producing substantially no crystals, into one or more blood vessels so as to substitute said second saccharide solution for said first saccharide solution in said organ;

resecting the whole or a desired portion of said organ perfused with the second saccharide solution from said animal;

piercing at least a part of said organ perfused with the second saccharide as a tissue sample with a needle assembly consisting of a number of metal needles fixed parallel to each other on a metal base;

cooling said tissue sample pierced with said needle assembly gradually to a predetermined temperature, further lowering the temperature to liquid nitrogen temperature, and preserving the tissue sample at liquid nitrogen temperature;

warming at least a part of said needle assembly to a temperature not below 20 °C within a limited time to raise the temperature of said sample above the freezing point of said second saccharide solution for thawing the preserved sample; and

removing said sample from said needle assembly.

25. A method for living-tissue preservation according to claim 24, wherein said organic solvent is dimethyl sulfoxide or glycerol.

26. A method for living-tissue preservation according to claim 25, wherein said second saccharide solution contains mannitol as said saccharide.

27. A method for living-tissue preservation according to claim 24, wherein said first saccharide solution contains glucose.

28. A method for living-tissue preservation according to claim 24, wherein the rate of said gradual cooling is at most 1.3 °C per minute on the average and said predetermined temperature is - 80 °C.

**29.** A method for living-tissue preservation according to any one of claims 24 to 28, wherein said limited time for warming the needle assembly is 3 minutes.

**30.** A method for living-tissue preservation, which comprises;

injecting the first saccharide solution for perfusion causing substantially no hemolysis into one or more blood vessels leading to an organ of an animal so as to substitute said first saccharide solution for blood in said organ,

injecting the second saccharide solution for further perfusion containing a saccharide and an organic solvent, an aqueous solution of said saccharide being free from phase separation and producing substantially no crystals at liquid nitrogen temperature and a mixture of said organic solvent and water being free from phase separation and producing substantially no crystals at liquid nitrogen temperature, into one or more blood vessels leading to said organ so as to substitute said second saccharide solution for said first saccharide solution in said organ;

piercing the whole or a desired portion of said organ perfused by said second saccharide solution as a tissue sample with a needle assembly consisting of a plurality of metal needles fixed parallel to each other on a metal base;

cooling said tissue sample pierced with said needle assembly gradually to a predetermined temperature, further lowering the temperature to liquid nitrogen temperature and preserving said sample at liquid nitrogen temperature;

warming said sample above the freezing point of said second saccharide solution within a limited time at the end of preservation; and

removing said sample from said needle assembly.

**31.** A method for living-tissue preservation according to claim 30, wherein the rate of said gradual cooling is at most 1.3 °C per minute on the average and said predetermined temperature is - 80 °C.

**32.** A method for living-tissue preservation according to claim 30 or 31, wherein said limited time for warming the sample is 4 minutes.

**33.** A method for living-tissue preservation according to claim 32, wherein the temperature of the sample is raised to - 5 °C to 5 °C within 4 minutes, thereafter raised to a temperature not below 25 °C at a rate less than 2.5 °C/min on the average at the end of preservation.

**34.** A method for living-tissue preservation which comprises injecting a perfusate into a blood vessel leading to an organ of an animal to substitute said perfusate for blood in said organ, cooling at least a part of said organ resected from said animal, further lowering the temperature to liquid nitrogen temperature and preserving at least a part of tissue of said organ, wherein;

peripheral nerve of a region including said organ is previously blocked before injecting said perfusate;

the first saccharide solution causing substantially no hemolysis in blood is injected into one or more blood vessels leading to said organ so as to be substituted for blood in said organ and said organ is resected from said animal during or after such substitution;

subsequently, the second saccharide solution containing a saccharide and an organic solvent, an aqueous solution of said saccharide being free from phase separation and producing substantially no crystals at liquid nitrogen temperature and a mixture of said organic solvent and water being free from phase separation and producing substantially no crystals at liquid nitrogen temperature, is injected into one or more blood vessels leading to said organ for further perfusion so as to be substituted for said first saccharide solution in said organ;

at least a part of said organ perfused by said second saccharide solution is pierced as a tissue sample with a needle assembly consisting of a plurality of metal needles fixed parallel to each other on a metal base, and said sample pierced with said needle assembly is gradually cooled to a predetermined temperture, and further cooled to and preserved at liquid nitrogen temperature;

the temperature of said sample is raised to a temperature above the freezing point of said second saccharide solution within 4 minutes for thawing said preserved sample; and

said sample is removed from said needle assembly.

**35.** A method for living-tissue preservation according to claim 34, wherein said organic solvent is dimethyl sulfoxide or glycerol.

**36.** A method for living-tissue preservation according to claim 34 or 35, wherein said second saccharide solution contains mannitol as said saccharide.

**37.** A method for living-tissue preservation according to claim 34, wherein said first saccharide solution contains glucose.

**38.** A method for living-tissue preservation according to claim 34, wherein the rate of said gradual cooling is at most 1.3 °C per minute on the average and said predetermined temperature is - 80 °C.

**39.** A method for living-tissue preservation according to claim 34, wherein the temperature of said sample is raised to a temperature ranging from - 5 °C to 5 °C within 4 minutes for thawing, then raised to at least 25 °C at a rate of not more than 4 °C per minute on the average at the end of preservation.

**40.** A method for living-tissue preservation and restoration which comprises cooling to and preserving at liquid nitrogen temperature at least a part of an organ resected from an animal as a tissue sample, thawing said tissue sample and raising the temperature of said sample to at least 25 °C, wherein;
the whole or a desired portion of said resected organ is pierced with a needle assembly consisting of multiple needles fixed parallel to each other on a metal base, and cooled to and preserved at liquid nitrogen temperature as a tissue sample;
for termination of preservation, at least a part of said metal needles is warmed so that the temperature of said tissue sample is raised to - 5 °C to 5 °C within 4 minutes so as to thaw said tissue sample;
said tissue sample is removed from said needle assembly; and
after thawing, the temperature of said tissue sample is raised to at least 25 °C at a rate of less than 2.5 °C per minute on the average so that the biological activity of said tissue sample can be restored.

**41.** A method for living-tissue preservation and restoration according to claim 40, wherein perfusion with a buffer containing saccharide and serum protein into blood vessels leading to said tissue sample is carried out while the temperature is raised to at least 25 °C after thawing so that the biological activity of said tissue sample can be restored.

**42.** A method for living-tissue preservation and restoration according to claim 40, wherein said buffer contains dibutyryl cyclic AMP.

**43.** A method for living-tissue preservation and restoration which comprises injecting a perfusate into a blood vessel leading to an organ of an animal so as to substitute said perfusate for blood in said organ, cooling at least a part of said organ resected from said animal to lower the temperature to liquid nitrogen temperature, preserving tissues of said organ, thawing and warming said tissues so that the biological activity can be restored, wherein;
the whole or a desired portion of said resected organ is pierced with a needle assembly consisting of multiple metal the whole or a desired portion of said resected organ is pierced with a needle assembly consisting of multiple metal needles fixed parallel to each other on a metal base, and cooled to and preserved at liquid nitrogen temperature as a tissue sample;
at the end of preservation, at least a part of said needle assembly is warmed so that the temperature of said tissue sample is raised to - 5 °C to 5 °C within 4 minutes for thawing said tissue sample;
said tissue sample is removed from said needle assembly; and
after thawing, the temperature of said tissue sample is raised to at least 25 °C at a rate of less than 2.5 °C per minutes on the average so that the biological activity of said tissue sample can be restored.

**44.** An aqueous liquid composition used as a perfusate to be injected into blood vessels leading to an organ of an animal for substitution for blood in said organ, which comprises;
a buffer of pH 7.4 containing sodium, potassium, hydrogen, chlorine and phosphate ions;
1 to 5 % by weight of glucose; and
1.5 to 7.5 % by weight of mammal serum albumin, the concentration of sodium chloride being 0.15 ± 0.05 mol.

**45.** An aqueous liquid composition used as a perfusate to be injected into blood vessels leading to an organ of an animal for substituting for blood in said organ, which comprises;
a buffer of pH 7.4 containing sodium, potassium, calcium, magnesium, hydrogen, chlorine, phosphate, sulfate and bicarbonate ions;

1 to 5 % by weight of glucose; and

1.5 to 7.5 % by weight of bovine serum albumin, the concentration of sodium chloride being 0.15 ± 0.05 mol.

46. An aqueous liquid composition according to claim 45 wherein said buffer has the same composition as that of Krebs-Henseleit bicarbonate buffer.

47. An aqueous liquid composition according to any one of claims 44 to 46, which contains a peripheral nerve blocking agent.

48. An aqueous liquid composition according to claim 47, wherein said peripheral nerve blocking agent has monoamine oxidase inhibitory activity.

49. An aqueous liquid composition used as a perfusate and preservation liquid to be injected at least one blood vessel leading to an organ of an animal to fill blood vessels and intracellular spaces in the tissue of said organ to achieve preservation of said tissue, which comprises;

a buffer of pH 7.4 containing sodium, potassium, hydrogen, chlorine and phosphate ions;

3 to 8 % by weight of mannitol;

1.5 to 7.5 % by weight of mammal serum albumin; and

3 to 15 % by weight of dimethyl sulfoxide or glycerol, the concentration of sodium chloride being 0.15 ± 0.05 mol.

50. An aqueous liquid composition used as a perfusate and preservation liquid to be injected at least one blood vessel leading to an organ of an animal to fill blood vessels and intracellular spaces in the tissue of said organ to achieve preservation of said tissue, which comprises;

a buffer of pH 7.4 containing sodium, potassium, calcium, magnesium, hydrogen, chlorine, phosphate, sulfate and bicarbonate ions;

3 to 8 % by weight of mannitol;

1.5 to 7.5 % by weight of bovine serum albumin; and

3 to 15 % by weight of dimethyl sulfoxide or glycerol, the concentration of sodium chloride therein being 0.15 ± 0.05 mol.

51. An aqueous liquid composition according to claim 50, wherein said buffer has the same composition as that of Krebs-Henseleit bicarbonate buffer.

52. A combination of perfusates to be injected at least one blood vessel leading to an organ of an animal to fill of said organ blood vessels and intracellular spaces in the tissue of said organ to achieve preservation of said tissue, which comprises;

the first aqueous liquid composition for removal of and substitution for blood in said organ, which comprises a buffer of pH 7.4 containing sodium, potassium, hydrogen, chlorine and phosphate ions; 1 to 5 % by weight of glucose; and 1.5 to 7.5 % by weight of bovine serum albumin, the concentration of sodium chloride being 0.15 ± 0.05 mol; in combination with a second aqueous liquid composition to fill blood vessels and intracellular spaces in said tissue of said organ comprising a buffer of pH 7.4 containing sodium, potassium, hydrogen, chlorine and phosphate ions; 3 to 8 % by weight of mannitol; 1.5 to 7.5 % by weight of bovine serum albumin; and 3 to 15 % by weight of dimethyl sulfoxide or glycerol, the concentration of sodium chloride being 0.15 ± 0.05 mol.

53. A combination of perfusates to be injected at least one blood vessel leading to an organ of an animal to fill blood vessels and the intracellular spaces in the tissue of said organ to achieve preservation of said tissue, which comprises;

the first aqueous liquid composition for removal of and substitution for blood in said organ, which comprises a buffer of pH 7.4 containing sodium, potassium, calcium, magnesium, hydrogen, chlorine, phosphate, sulfate and bicarbonate ions; 3 to 8 % by weight of mannitol; 1.5 to 7.5 % by weight of bovine serum albumin, and 3 to 15 % by weight of dimethyl sulfixude or glycerol, the concentration of sodium chloride being 0.15 ± 0.05 mol; in combination with a second aqueous liquid composition to fill blood vessels and intracellular spaces in said tissue of said organ which comprises a buffer of pH 7.4 containing ions of sodium, potassium, calcium, magnesium, hydrogen, chlorine, phosphate, sulfate and bicarbonate; 3 to 8 % by weight of mannitol; and 1.5 to 7.5 % by weight of bovine serum albumin, the concentration of sodium chloride therein being 0.15 ± 0.05 mol.

**54.** A perfusate according to claim 53 wherein said buffer has the same composition as that of Krebs-Henseleit bicarbonate buffer.

**55.** A method for treatment of tissue after preservation, which comprises injecting a perfusate comprising a buffer of pH 7.4 containing sodium, potassium, hydrogen, chlorine and phosphate ions; 0.5 to 3 % by weight of glucose; 0.5 to 3 % by weight of mannitol; and 1.5 to 7.5 % by weight of serum albumin, the concentration of sodium chloride being $0.15 \pm 0.05$ mol, into at least one blood vessel leading to a tissue preserved at the temperature not exceeding 10 °C to remove and substitute for the liquid filling blood vessels and intracellular spaces in said tissue, and raising the temperature of said tissue to at least 25 °C at a rate less than 2.5 °C per minute on the average before restoration of biological activity of said tissue.

**56.** A method for treatment of tissue after preservation according to claim 55, wherein said buffer of pH 7.4 contains sodium, potassium, calcium, magnesium, hydrogen, chlorine, phosphate, sulfate and bicarbonate ions.

**57.** A method for living-tissue preservation which comprises injecting a perfusate into one or more blood vessels leading to an organ of an animal to substitute said perfusate for blood in said organ, cooling at least a part of said organ resected from said animal to a temperature not exceeding -80 °C and preserving at least a part of tissue of said organ at said temperature, wherein;

the first saccharide solution causing substantially no hemolysis in blood is injected for perfusion into one or more blood vessels leading to said organ to be substitued for blood in said organ;

the second saccharide solution containing a saccharide and an organic solvent is injected for further perfusion into one or more blood vessels leading to said organ to substitute said second saccharide solution for said first saccharide solution in said organ, an aqueous solution of said saccharide solution being free from phase separation and producing substantially no crystals at said temperature, a mixture of said organic solvent and water being free from phase separation and producing substantially no crystals at said temperature;

said organ is resected from said animal during or after said perfusion or further perfusion;

at least a part of said organ perfused by said second saccharide solution is pierced as tissue sample with a needle assembly consisting of a plurality of metal needles fixed parallel to each other on a metal base,

said sample pierced with said needle assembly is cooled gradually to -80 °C, further cooled to and preserved at said temperature not exceeding -80 °C;

the temperature of said sample is raised to a temperature above the freezing point of said second saccharide solution within 4 minutes for thawing the preserved sample; and

said sample is removed from said needle assembly.

**58.** A method for living-tissue preservation which comprises injecting a perfusate into one or more blood vessels leading to an organ of an animal to substitute said perfusate for blood in said organ, cooling at least a part of said organ resected from said animal as a tissue sample to a temperature not exceeding -80 °C and preserving said tissue sample at said temperature, wherein;

the first saccharide solution causing substantially no hemolysis in blood and containing a peripheral nerve blocking agent is injected for perfusion into one or more blood vessels leading to said organ to be substitued for blood in said organ;

the second saccharide solution containing a saccharide and an organic solvent is injected for further perfusion into one or more blood vessels leading to said organ to substitute said second saccharide solution for said first saccharide solution in said organ, an aqueous solution of said saccharide solution being free from phase separation and producing substantially no crystals at said temperature, a mixture of said organic solvent and water being free from phase separation and producing substantially no crystals at said temperature;

at least a part of said organ is resected from said animal as a tissue sample during or after said perfusion or further perfusion;

said tissue sample of said organ perfused by said second saccharide solution is pierced with a needle assembly consisting of a plurality of metal needles fixed parallel to each other on a metal base,

said sample pierced with said needle assembly is cooled gradually to -80 °C, further cooled to and preserved at said temperature not exceeding -80 °C;

the temperature of said sample is raised to a temperature above the freezing point of said second saccharide solution within 4 minutes for thawing the preserved sample; and

said sample is removed from said needle assembly.

59. A method for living-tissue preservation according to claim 58, wherein said temperature not exceeding -80 °C is liquid nitrogen temperature.

60. A method for living-tissue preservation which comprises injecting a perfusate into one or more blood vessels leading to an organ of an animal to substitute said perfusate for blood in said organ, cooling at least a part of said organ resected from said animal as a tissue sample, further lowering the temperature to a temperature not exceeding -80 °C and preserving said tissue sample at said temperature, wherein;

the first saccharide solution causing substantially no hemolysis in blood and containing a peripheral nerve blocking agent is injected for perfusion into one or more blood vessels leading to said organ to be substitued for blood in said organ;

the second saccharide solution containing a saccharide and an organic solvent is injected for further perfusion into one or more blood vessels leading to said organ to substitute said second saccharide solution for said first saccharide solution in said organ, an aqueous solution of said saccharide solution being free from phase separation and producing substantially no crystals at said temperature, a mixture of said organic solvent and water being free from phase separation and producing substantially no crystals at said temperature;

said organ is resected from said animal during or after said perfusion or further perfusion;

at least a part of said organ perfused by said second saccharide solution is pierced as a tissue sample with a needle assembly consisting of a plurality of metal needles fixed parallel to each other on a metal base,

said sample pierced with said needle assembly is cooled gradually to -80 °C, further cooled to and preserved at said temperature not exceeding -80 °C;

the temperature of said sample is raised to a temperature above the freezing point of said second saccharide solution within 4 minutes for thawing the preserved sample;

said sample is removed from said needle assembly, and

the temperature of said sample is further raised to 25 °C at a rate of not more than 4 °C per minute on the average.

61. A method for living tissue preservation according to claim 60, wherein the temperature of said sample is raised to a temperature ranging from -5 °C to 5 °C within 4 minutes for said thawing.

62. A method for living tissue preservation according to claim 60 or 61, wherein said rate of raising the temperature to 25 °C is less than 2.5 °C per minute on the average.

63. A method for living-tissue preservation comprising injecting a perfusate into a blood vessel leading to an organ of an animal to substitute said perfusate for blood in said organ, cooling at least a part of said organ resected from said animal as a tissue sample to a temperature not exceeding 10 °C and preserving said tissue sample at said temperature, wherein;

the first saccharide solution is injected for perfusion into one or more blood vessels leading to said organ so as to be substitued for blood in said organ, said first saccharide solution comprising 1 to 5 % by weight of glucose, 1.5 to 7.5 % of bovine serum albumine and a buffer of pH 7.4 containing sodium, potassium, hydrogen, chlorine and phosphate ions, the concentration of sodium chloride therein being 0.15 ± 0.05 mol;

the second saccharide solution is injected for further perfusion into one or more blood vessels leading to said organ so as to be substituted for said first saccharide solution in said organ, said second saccharide solution comprising 3 to 8 % by weight of mannitol, 1.5 to 7.5 % of bovine serum albumine and a buffer of pH 7.4 containing sodium, potassium, hydrogen, chlorine and phosphate ions, the concentration of sodium chloride therein being 0.15 ± 0.05 mol; and

at least a part of said organ resected from said animal as a tissue sample is cooled to and preserved at said temperature.

64. A method for living-tissue preservation according to claim 63, wherein said first saccharide solution contains a peripheral nerve blocking agent.

65. A method for living-tissue preservation which comprises injecting a perfusate into a blood vessel leading to an organ of an animal to substitute said perfusate for blood in said organ, cooling at least a part of said organ resected from said animal to a temperature not exceeding 10 °C and preserving at least a part of tissue of said organ at the temperature, wherein;

the first saccharide solution is injected for perfusion into one or more blood vessels leading to said organ to be substitued for blood in said organ, said first saccharide solution comprising 1 to 5 % by weight of glucose, 1.5 to 7.5 % of bovine serum albumine and a buffer of pH 7.4 containing sodium, potassium, hydrogen, chlorine and phosphate ions, the concentration of sodium chloride therein being 0.15 ± 0.05 mol;

the second saccharide solution is injected for further perfusion into one or more blood vessels leading to said organ to be substituted for said first saccharide solution in said organ, said second saccharide solution comprising 3 to 8 % by weight of mannitol, 1.5 to 7.5 % of bovine serum albumine and a buffer of pH 7.4 containing sodium, potassium, hydrogen, chlorine and phosphate ions, the concentration of sodium chloride therein being 0.15 ± 0.05 mol;

said organ is resected from said animal during or after said perfusion or further perfusion;

at least a part of said organ perfused by said second saccharide solution is pierced as tissue sample-with a needle assembly consisting of a plurality of metal needles fixed parallel to each other on a metal base,

said sample pierced with said needle assembly is cooled to and preserved at said temperature;

the temperature of said sample is raised to a temperature above the freezing point of said second saccharide solution if thawing of the preserved sample is necessary; and

said sample is removed from said needle assembly.

66. A method for living-tissue preservation according to claim 65, wherein said first saccharide solution contains a peripheral nerve blocking agent.

67. A method for living-tissue preservation according to claim 65, wherein said peripheral nerve blocking agent is a monoamine oxidase inhibitor.

68. A method for living-tissue preservation comprising injecting a perfusate into a blood vessel leading to an organ of an animal to substitute said perfusate for blood in said organ, cooling at least a part of said organ resected from said animal as a tissue sample to a temperature not exceeding 0 °C and preserving said tissue sample at said temperature, wherein;

the first saccharide solution is injected for perfusion into one or more blood vessels leading to said organ so as to be substitued for blood in said organ, said first saccharide solution causing substantially no hemolysis in blood;

the second saccharide solution containing a saccharide and an organic solvent is injected into one or more blood vessels leading to said organ for further perfusion so as to substituted for said first saccharide solution in said organ, an aqueous solution of said saccharide in said second saccharide solution being free from phase separation and producing substantially no crystals below freezing temperature, a mixture of said organic solvent and water being free from phase separation and producing substantially no crystals below freezing temperature; and

at least a part of said organ resected from said animal as a tissue sample is cooled to and preserved at said temperature.

69. A method for living-tissue preservation according to claim 68, wherein said first saccharide solution contains a peripheral nerve blocking agent.

70. A method for living-tissue preservation comprising injecting a perfusate into a blood vessel leading to an organ of an animal to substitute said perfusate for blood in said organ, cooling at least a part of said organ resected from said animal as a tissue sample to a temperature not exceeding 0 °C and preserving said tissue sample at said temperature, wherein;

peripheral nerve in the region including said organ of said animal is blocked before said injection of a perfusate;

the first saccharide solution is injected for perfusion into one or more blood vessels leading to said organ so as to be substitued for blood in said organ, said first saccharide solution causing substantially no hemolysis in blood;

the second saccharide solution containing a saccharide and an organic solvent is injected into one or more blood vessels leading to said organ for further perfusion so as to substituted said first saccharide solution in said organ, an aqueous solution of said saccharide in said second saccharide solution being free from phase separation and producing substantially no crystals below freezing temperature, a mixture of said organic solvent and water being free from phase separation and producing substantially no crystals below freezing temperature; and

at least a part of said organ resected from said animal as a tissue sample is cooled to and preserved at said temperature.

71. A method for living-tissue preservation comprising injecting a perfusate into a blood vessel leading to an organ of an animal to substitute said perfusate for blood in said organ, cooling at least a part of said organ resected from said animal as a tissue sample to a temperature not exceeding 0 °C and preserving said tissue sample at said temperature, wherein;

the first saccharide solution is injected for perfusion into one or more blood vessels leading to said organ so as to be substitued for blood in said organ, said first saccharide solution causing substantially no hemolysis in blood;

the second saccharide solution containing a saccharide and an organic solvent is injected into one or more blood vessels leading to said organ for further perfusion so as to be substituted for said first saccharide solution in said organ, an aqueous solution of said saccharide in said second saccharide solution being free from phase separation and producing substantially no crystals below freezing temperature, a mixture of said organic solvent and water being free from phase separation and producing substantially no crystals below freezing temperature;

said organ is resected from said animal during or after said perfusion or said further perfusion;

at least a part of said organ perfused by said second saccharide solution is pierced as a tissue sample with a needle assembly consisting of a plurality of metal needles fixed parallel to each other on a metal base, and

said tissue sample pierced with said needle assembly is cooled to and preserved at said temperature.

72. A method for living-tissue preservation according to claim 71, wherein said first saccharide solution contains a peripheral nerve blocking agent.

<table>
<tr><td>European Patent Office</td><td>EUROPEAN SEARCH REPORT</td><td>Application Number<br>EP 95 10 0897</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Week 7735<br>Derwent Publications Ltd., London, GB;<br>AN 77-62552Y [35]<br>& SU-A-545 312 (CLINICAL EXP SURGER) , 21 February 1977<br>* abstract * | 44-46 | A01N1/00<br>A01N1/02 |
| X | DATABASE WPI<br>Week 7723<br>Derwent Publications Ltd., London, GB;<br>AN 77-41228y [23]<br>& SU-A-526 331 (RIGA MEDICINE INST) , 3 November 1976<br>* abstract * | 44-48 | |
| A | EP-A-0 096 997 (HOXAN KK) 28 December 1983<br>* page 5, paragraph 3 - page 12, paragraph 1 * | 1-72 | |
| A | DATABASE WPI<br>Week 8520<br>Derwent Publications Ltd., London, GB;<br>AN 85-120185 [20]<br>& JP-A-60 061 501 (HOKUSAN) , 9 April 1985<br>* abstract * | 1-72 | TECHNICAL FIELDS SEARCHED (Int.Cl.6)<br><br>A01N |
| A | EP-A-0 399 647 (CRYOLIFE INC) 28 November 1990<br>* page 3, line 5 - line 10 *<br>* page 3, line 41 - page 4, line 7 * | 1-72 | |
| A | WO-A-93 00808 (AMERICAN NAT RED CROSS) 21 January 1993<br>* page 41, line 4 - page 51, line 8 * | 1-72 | |
| | -/-- | | |

The present search report has been drawn up for all claims

| Place of search | Date of completion of the search | Examiner |
|---|---|---|
| THE HAGUE | 28 April 1995 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 664 080 A1

European Patent Office

# EUROPEAN SEARCH REPORT

Application Number
EP 95 10 0897

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 356 367 (GRINO BOIRA JOSE MARIA) 28 February 1990<br>* column 2, line 5 - line 10 *<br>--- | 1-72 | |
| A | US-A-4 471 629 (TOLEDO-PEREYRA LUIS H) 18 September 1984<br>* column 1, line 45 - column 2, line 20 *<br>----- | | |

TECHNICAL FIELDS
SEARCHED      (Int.Cl.6)

The present search report has been drawn up for all claims

| Place of search | Date of completion of the search | Examiner |
|---|---|---|
| THE HAGUE | 28 April 1995 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22